# EUROPÄISCHE PATENTSCHRIFT

(11) **EP 4 325 829 B1**
(45) Veröffentlichungstag und Bekanntmachung des Hinweises auf die Patenterteilung: **02.04.2025**
(21) Anmeldenummer: 23191426.8
(22) Anmeldetag: 14.08.2023
(51) Int. Cl.: H04N 1/54, H04N 1/60

(54) **VERFAHREN ZUR DURCHFÜHRUNG VON TRANSFORMATIONEN VON FARBDATEN**
METHOD FOR PERFORMING TRANSFORMATIONS OF COLOR DATA
PROCÉDÉ POUR EFFECTUER DES TRANSFORMATIONS DE DONNÉES DE COULEUR

(30) Priorität: 15.08.2022 EP 22020391
(43) Veröffentlichungstag der Anmeldung: 21.02.2024
(73) Patentinhaber: GMG GmbH & Co. KG, 72072 Tübingen (DE)
(72) Erfinder: Hoffstadt, Hanno, 89077 Ulm (DE)
(74) Vertreter: Rausch, Michael

(56) Entgegenhaltungen:
- DE-A1- 102004 003 300
- US-A- 5 892 891
- US-A1- 2011 007 332

## Beschreibung

Die vorliegende Erfindung betrifft ein Verfahren zur Durchführung von Transformationen von Farbdaten von einem Quell-Farbraum mit n Farben in einen Ziel-Farbraum mit m Werten unter Nutzung einer Transformationsvorschrift TRV.

In der Druckindustrie werden sehr häufig Farbtransformationen benötigt, um die Datensätze für die zu druckenden farbigen Druckerzeugnisse herzustellen.

Ausgangspunkt sind digitale Layouts, die z. B. Farbbilder aus Fotografie oder Scan, Illustrationen und Text enthalten können. Diese Layouts sind Vorlagen, die entsprechend in Form von Druckerzeugnissen vervielfältigt werden sollen. Ein solches Layout ist in welcher Form auch immer entworfen oder entwickelt worden und repräsentiert von der farblichen Erscheinung her das, was für den jeweils vorgesehenen Zweck gewünscht wird. Ein Layout umfasst in der Regel mehrere Layout-Objekte. Jedes einzelne Layout-Objekt hat also eine farbliche Erscheinung, die sich eindeutig identifizieren lässt. Bekanntermaßen werden farbliche Erscheinungen durch die Mischung von nur wenigen Farben erzeugt, für Druckerzeugnisse beispielsweise durch einfaches Übereinanderdrucken von gerasterten Druckfarben, wobei jede Farbe durch ihre Wirkung einen gewissen Beitrag leistet und im Zusammenwirken der unterschiedlichen Farbschichten das Endergebnis erzeugt wird.

Die farbliche Erscheinung jedes einzelnen Layout-Objekts wird durch seine Farbwerte (von Bildpixeln, Konturfarben oder Füllfarben) definiert, die die Datenquelle darstellen. Im Falle von Bildpixeln handelt es sich oft um Millionen von Pixeln mit jeweils eigenen Farbwerten. Diese Quell-Farbwerte beziehen sich immer auf einen Quell-Farbraum mit einer bestimmten Anzahl von Farben. Das heißt, jedem Objekt im Layout ist ein Farbraum zugeordnet, der meist eine Beziehung zu einem Gerät hat, häufig ein ganz bestimmter RGB-Farbraum wie sRGB oder Adobe RGB, oder ein CMYK-Farbraum, nur Schwarz (Graustufen) oder ein anderer Druck-Farbraum. Die Objektfarbwerte sind entsprechend als RGB-Werte, CMYK- oder Graustufen-Werte (0-100% Farbe) oder andere Farbwerte beziffert. Die Gesamtanzahl der Gerätefarben des Quell-Farbraumes wird hier mit n bezeichnet.

Farbräume werden üblicherweise durch ICC-Farbprofile (ISO 15076-1:2010) beschrieben, Layouts durch PDF- und PDF/X-Dateien (ISO 15930-Serie), die diese ICC-Farbprofile enthalten oder referenzieren können.

Aus den unterschiedlichsten Gründen und Motiven soll das Layout reproduziert werden. Für die Reproduktion stehen die unterschiedlichsten Druckverfahren und Druckmaschinen zur Verfügung. Diese verfügen über die Möglichkeit, eine bestimmte Anzahl von Farben in einer bestimmten Art und Weise auf ein Trägermaterial aufzubringen. Dabei handelt es sich um die Gerätefarben des Drucksystems. Diese definieren bzw. sind Grundlage des Ziel-Farbraumes, der wiederum alle denkbaren Kombinationen der Gerätefarben des Drucksystems umfasst. Man spricht hier von den m Gerätefarben des Ziel-Farbraumes. Auch sind Transformationen in geräteunabhängige Werte oft notwendig, wie Lab- oder Spektralfarben (siehe unten), beispielsweise um die Ergebnisse späterer Messungen von Ausdrucken überprüfen zu können oder eine geräteunabhängige Datenbasis für die Darstellung auf beliebigen Geräten zur Verfügung zu stellen. Deshalb spricht man oberbegrifflich von den m Werten des Zielfarbraumes.

Oft werden bei der Gestaltung des Layouts standardisierte Farbräume als Quell-Farbräume verwendet, aber der Druck findet mittels konkreter Ausgabesysteme mit ihrem individuell eigenen Farbverhalten statt. Daher ist es erforderlich, für jeden Rasterpunkt des Layouts die gegebene Kombination der n Gerätefarben des Quell-Farbraumes in eine für den Druck erforderliche Kombination der m Gerätefarben des Ziel-Farbraumes zu transformieren. Das Ziel ist dabei, durch den Druck ein Ergebnis zu erzeugen, welches der Vorlage, also dem digitalen Layout, möglichst nahekommt, also im Idealfall die gleiche Erscheinung beim Betrachter hervorruft.

Als Rasterpunkt oder Pixel wird jeder Punkt eines Layouts bezeichnet, der sich durch eine vorgegebene Rasterung der Layout-Objekte ergibt. Diese wiederum steht im Zusammenhang mit der sogenannten Auflösung der Darstellung etwa für die Erstellung der Druckform. Legt man über ein Layout ein Raster mit i Zeilen und j Spalten, so ergibt sich eine Auflösung von i x j Pixeln. Jedes einzelne Pixel kann nun hinsichtlich seiner farblichen Konstruktion identifiziert werden.

Farbtransformationen werden benutzt, um die Layoutdaten in druckfähige Daten für ein gewünschten Satz Druckfarben umzuwandeln. Dann entstehen z. B. einheitliche, reine CMYK-Daten für Offsetdruck. Außerdem werden Farbtransformationen benutzt, um die farbliche Erscheinung dieser Druckdaten verbindlich zu simulieren, bevor gedruckt wird. Die farbliche Erscheinung wird üblicherweise geräteunabhängig in dem CIELAB-Farbraum (kurz: Lab) oder mithilfe von spektralen Reflexionsfaktoren beschrieben. Man transformiert die Druckdaten mit ihrem zugeordneten Farbraum in diese geräteunabhängigen Farbdaten. Diese werden an einem kalibrierten Bildschirm oder mit speziellen Prüfdruck-Systemen dargestellt (ein sogenannter "Proof", meist mit Inkjet-Systemen). Verwandt damit ist die Aufgabe, Druckdaten für andere Druckverfahren anzupassen, d. h. aus existierenden Druckdaten durch eine Transformation neue Druckdaten für andere Druckfarben zu erzeugen und dabei den ursprünglichen Farbeindruck möglichst gut zu erhalten.

Bei den üblichen Druckvorgängen mit in der Regel nicht mehr als vier Farben sind diese Transformationsvorgänge weitgehend erschlossen und durch entsprechende Datensysteme standardisiert.

Jedoch wird beispielsweise im Verpackungsdruck sehr häufig mit mehr als 4 Druckfarben gedruckt. Traditionell werden Markenfarben als Schmuckfarben ergänzt und Bilder mit produktspezifischen Farben aufgebaut (z. B. Milchprodukte mit einer zusätzlichen hellgrauen Druckfarbe, Schokoladenprodukte mit verschiedenen braunen Druckfarben). Bei durchsichtigen Folienverpackungen wird oft weiße Druckfarbe zusätzlich eingesetzt. Jede benutzte Druckfarbe belegt dabei ein Druckwerk in der Druckmaschine und braucht eine eigene Druckform für die Farbübertragung. Die Farben werden nacheinander aufgetragen, und es sind prinzipiell alle Farben miteinander kombinierbar (überdruckbar). Die Gesamtheit der separaten Druckformen führt zu dem Ausdruck "Separation" als Verfahren bzw. Ergebnis der Erstellung der Druckdaten.

Maschinen mit 7-10 Farbwerken sind keine Seltenheit im Flexodruck, Offsetdruck und Tiefdruck. Designer für Markenartikel können die Druckfarben aus tausenden Sonderfarben auswählen, etwa aus über 2000 Farbtönen im PANTONE^{®} System. Diese Druckfarben werden von Farbherstellern produziert und geliefert. Im sogenannten Digitaldruck werden Inkjet- und tonerbasierte Druckmaschinen eingesetzt, die oft 6-8 Farbwerke enthalten, aber mit festen Druckfarbsätzen betrieben werden, da Inkjet-Tinten und farbige Toner oft sehr spezielle, maschinenabhängige Verarbeitungseigenschaften haben müssen oder der Wechsel technisch zu umständlich wäre. Typische Farbsätze enthalten CMYK ergänzt um Orange oder Rot, Grün, Blau oder Violett, Weiß.

Digitaldruckverfahren arbeiten zurzeit zwar langsamer als konventionelle Druckverfahren, da aber keine Druckformen erstellt werden müssen und Farben nicht gewechselt werden, ist der Aufwand zum Einrichten sehr viel geringer, und damit werden kleine Auflagen ökonomischer und personalisierter Druck möglich. Hier besteht daher der Wunsch, eine anfangs konventionell produzierte Verpackung nach Bedarf in Kleinauflagen oder gar personalisiert (Auflage 1) zu drucken, wobei aber die farbliche Erscheinung möglichst identisch mit den zuvor gedruckten Produkten sein soll, die mit individuellen Sonderfarben produziert wurden. Denn im Verkaufsregal können verschiedene Chargen nebeneinanderstehen. Um das zu erreichen, werden die für das konventionelle Druckverfahren vorliegenden Druckdaten aus dessen Quell-Farbraum in einen Ziel-Farbraum konvertiert, der das Digitaldruckverfahren beschreibt. Im Extremfall des variablen, personalisierten Druckens müssen für jedes Exemplar andere Quell-Daten transformiert werden, dann wird die Transformation zu einem Engpass.

Die eingangs erwähnten Farbtransformationen konvertieren also von einem Quell-Farbraum Q (beispielsweise mit n Gerätefarben) in einen anderen Ziel-Farbraum Z mit m Werten (beispielsweise Gerätefarben oder den 3 CIELAB-Werten L, a, b). Dies erfolgt durch Anwendung einer Transformationsvorschrift TRV. Dabei kann es sich um Rechenformeln, Transformations-Modelle oder bereits auf Basis der TRV erstellte Transformationstabellen handeln. Sie müssen oft pro Pixel angewendet werden, daher ist ein hoher Durchsatz wichtig (Millionen Pixel pro Sekunde). Um das zu erreichen, wird in einer angefertigten Tabelle interpoliert, wie zum Beispiel im ICC-Industriestandard. Die Tabelle ist für Kombinationen von n Farbwerten aufgebaut. Jede der n Eingangsfarben kann Werte zwischen 0 und 100% Farbauftrag annehmen. Die Tabelle kann nicht alle Kombinationen auflisten, sondern tastet jede Eingangsfarbe mit einer bestimmten vorgegebenen Auflösung ab. Sie ist ein regelmäßiges rechtwinkliges n-dimensionales Gitter, das alle Kombinationen der abgetasteten Stufen enthält. Dazwischen wird n-dimensional interpoliert. Die Genauigkeit hängt von der Abtastung ab. Typische Abtastungen sind für n=3 (RGB / Lab) 33 Stufen (33³ ≈ 36000 Tabelleneinträge), für n=4 (CMYK) 17 Stufen (alle 6.25%, 17⁴ ≈ 84000 Tabelleneinträge). Die Anzahl der Abstufungen ist die Basis der Potenz, die Anzahl n der Druckfarben steht im Exponenten. Bei der Erzeugung von Transformationstabellen handelt es sich um für den Fachmann geläufige Maßnahmen. Sie basieren beispielsweise auf der spektrometrischen Vermessung von gedruckten Farben, Berechnungen zur Abschätzung und/oder Interpolation und dergleichen.

Die Tabellengröße steigt exponentiell mit der Anzahl n der Eingangsfarben. Weil der Speicherplatz beschränkt ist, muss aus praktischen Gründen die Abtastung grober werden. Für den häufigen Fall n=7 werden oft nur noch 6 oder 7 Stufen verwendet. Ein Beispiel dafür ist das weit verbreitete Open-Source-Farbmanagementsystem LittleCMS, das 7 Stufen benutzt (alle 16.67%, 7⁷ ≈ 820000 Tabelleneinträge). Die Tabellenstruktur führt daher zu folgendem Problem: je mehr Druckfarben, desto größer ist die Tabelle, und desto weniger Abstufungen können gespeichert werden. Anwender erwarten bei CMYK + Zusatzfarben eine vergleichbare Genauigkeit, wie sie es von CMYK gewohnt sind. 7 Stufen sind erheblich zu grob.

Bekannte Lösungsansätze sind offenbart in der DE 10 2004 003 300 A1, wonach ZuordnungsTabellen, die mehr als vier Eingangs-Farbkomponenten haben, in mehrere Zuordnungstabellen mit maximal vier Eingangs-Farbkomponenten aufgeteilt werden. Mit dieser Technik soll das Problem der zu großen Zuordnungstabellen gelöst werden. Es handelt sich dabei um einen konkreten Vorschlag, dieses Problem zu lösen, indem konventionsgemäß grundsätzlich auf 4-Komponenten-Tabellen reduziert wird, da der Stand der Technik die zur seiner Zeit gültige Tatsache nutzt, dass auch in einem Sieben-Farbendruck üblicherweise nicht mehr als vier Farben an einer Stelle des Druckbogens übereinander gedruckt werden. Aus diesem Grunde wird auch die Reduktion auf 4-Komponenten-Tabellen forciert. Um dies im Zweifel sicherzustellen, werden zusätzliche Verfahren wie Gray Component Replacement (GCR) und Color Component Replacement (CCR) bei der Erstellung der Separationstabelle angewandt. Ein gleichartiger Stand der Technik ergibt sich aus Boll H:"A COLOR TO COLORANT TRANSFORMATION FOR A SEVEN INK PROCESS", PROCEEDINGS OF SPIE, IEEE, US, Bd. 2170, 1. Februar 1994 (1994-02-01), Seiten 108-118, und der US 5 892 891 A.

Bekannte Lösungsansätze verwenden ein Modell oder eine Kombination von Tabelle und Modell. Ein Modell ist eine meist mathematisch basierte Transformationsvorschrift. So kann der Lab-Farbwert eines Überdrucks aus den einzelnen Druckfarben geschätzt werden. Das geschieht z. B. bei der Darstellung von Layouts oder PDF-Dateien am Bildschirm und ist schnell, aber ungenau. In der ICC-Weiterentwicklung iccMAX wird vorgeschlagen, Einzelfarben spektral zu verrechnen, oder Tabellen für den CMYK-Anteil zu benutzen und deren Wert für jede weitere Farbe zu modifizieren. In allen Fällen ist das Hinzufügen einzelner Farben zu ungenau, weil es die Wechselwirkung der Farben in Überdrucken nicht oder unzureichend berücksichtigt, an denen diese Farben beteiligt sind.

Es gibt zwar genauere Modelle, die das Überdruckverhalten von Farbmischungen besser berechnen, aber die sind bei weitem nicht schnell genug, um für die Transformation von Millionen von Pixeln brauchbar zu sein. Außerdem liefern die Modelle Lab-Werte oder Spektren, aber keine Geräte-Farbwerte, sind also für direkte Transformation von Gerät zu Gerät ("device-link") nicht geeignet. Denn die auszugebenden Geräte-Farbwerte unterliegen oft speziellen Separationsregeln (s. u.) und brauchen für hohe Qualität meist eine besondere Aufbereitung. Die Transformation in Gerätefarben ist jedoch eine überaus häufige Anwendung.

Wie bereits detailliert ausgeführt wurde, wird die farbliche Charakterisierung von übereinander gedruckten Druckfarben mit Hilfe von Tabellen abgebildet, die die Transformation von Druckfarbanteilen auf der Eingabeseite in m geräteunabhängige Werte (z. B. CIELAB-Farbwerte oder Reflexionsspektren) oder in m Geräte-Farbwerte eines anderen Ausgabegerätes leisten. Diese ausgabeseitigen Werte sind Tupel, z. B. 3 Lab-Komponenten, m Druckfarbenkomponenten, oder m Spektralwertkomponenten (für m Wellenlängenbänder). Berechnungen auf diesen Tupeln werden komponentenweise durchgeführt.

Diesen Tabellen liegen in der Regel Farbkombinationen auf Testtafeln zugrunde, d. h. sie existieren nur für solche Farbkombinationen, die in einem Druckversuch angedruckt und dann farbmetrisch vermessen wurden. Häufig werden solche Tabellen auch in Form von ICC-Profilen abgespeichert und für Transformationen verwendet.

Sehr häufig werden CMYK-Testtafeln eingesetzt, um den Farbumfang dieser 4 wichtigen Farben genau abzutasten. Wenn CMYK um weitere Prozessfarben ergänzt wird, um den Farbumfang zu vergrößern, werden gerne Orange oder Rot (hier O), Grün (G), Blau oder Violett (hier V) eingesetzt. Diese Farben sollen jeweils einen Buntton-Sektor erweitern (ECG, Expanded Color Gamut). Ein bekanntes Verfahren ("Equinox^{™}") benutzt CMYK-Testtafeln und tauscht im Druck je eine Farbe durch ihre Komplementärfarbe aus. So entstehen z. B. Testtafeln für OMYK (C durch O ersetzt), CGYK (M durch G ersetzt), CMVK (Y durch V ersetzt), und damit auch die Transformationstabellen für die Farbgruppen CMYK, OMYK, CGYK, CMVK. Außerdem ist es im Verpackungsdruck gängige Praxis, die schwarze Druckfarbe des CMYK auszutauschen gegen eine andere dunkle Farbe wie Dunkelblau, Dunkelgrün oder Dunkelbraun, wenn man solche als wichtige und häufige Markenfarben hat und im Zusammendruck nutzen möchte, denn dann kann man die gut etablierte 4-dimensionale CMYK-artige Farbverarbeitung nutzen.

Für weitere Zusatzfarben (X, ...), die nicht regelmäßig im Prozess eingesetzt werden, sondern nur für einzelne Aufträge, gibt es allerdings zu viele Kombinationen, als dass sich ein Andruck von Testtafeln (etwa CMY+X für viele verschiedene X) lohnen würde. Solche Farben werden meist nur einzeln charakterisiert, z. B. werden für die Pantone^{®}-Farben Referenzdaten lizensiert.

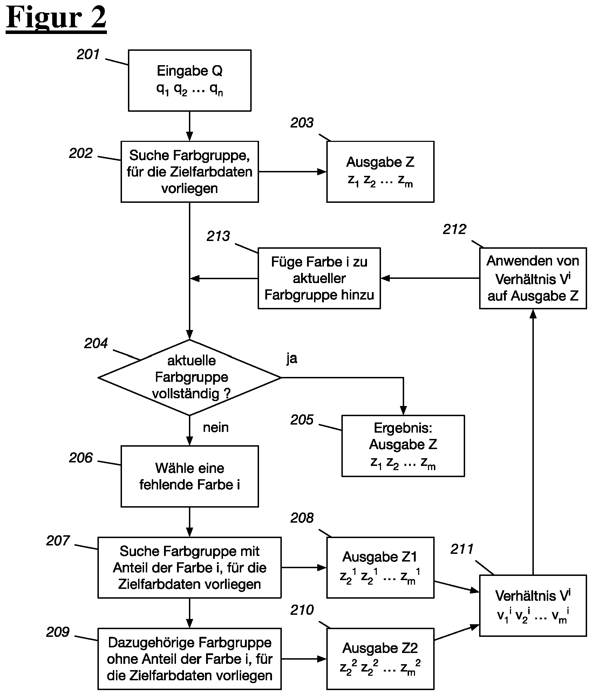

Auch wenn Druckdaten normalerweise höchstens 4 Farben gleichzeitig nutzen, und als Folge davon sich farbliche Charakterisierungen oft auf höchstens 4 Farben gleichzeitig beschränken, und Layout-Objekte dann nur höchstens 4-farbige Quell-Farbräume brauchen, kommt es vor, dass doch Elemente mit mehr als 4 Farben transformiert werden müssen. Zwei typische Ursachen sind Überfüllungen und Bildskalierung mit Resampling, siehe Figur 2.

Überfüllungen sind Konturvergrößerungen von im Layout aneinanderstoßenden Vektor-Objekten zur Vermeidung von passerbedingten sogenannten "Blitzern" in konventionellen Druckverfahren. Durch diese Vergrößerungen überlappen die Objekte etwas. Die Überlappung kann dann mehr Druckfarben als die einzelnen Objekte enthalten (z. B. die Vereinigungsmenge). Insbesondere bei Proof-Anwendungen will man diese prozesswichtigen neuen Kanten auch sehen. Es wäre nicht akzeptabel, hier stattdessen eine Signalfarbe zu erhalten, die signalisiert, dass keine Informationen für diesen Übereinanderdruck vorliegen.

Bei der Verarbeitung von Pixeldaten (aus Bildern oder aus gerasterten Vektordaten) kommt es oft zu einer Anpassung der Auflösung. Dann werden benachbarte Pixel durch Reskalierung anteilig gemischt (bilineare oder bikubische Skalierung, Antialiasing). Die Mischung enthält dann ebenfalls die Vereinigungsmenge der Druckfarben der beitragenden Pixel.

Also können zu transformierende Eingabedaten mit 5 Farben auftreten, auch wenn im Layout nicht mehr als 4-farbige Objekte enthalten sind, und zwar sowohl bei Vektor- als auch bei Pixeldaten. Wenn aber keine Transformationsvorschriften vorliegen, die die 5 Farben aus dem Quell-Farbraum in die m Werte des Ziel-Farbraums transformieren lassen, sind herkömmliche Transformationen beispielsweise unter Nutzung von Transformationstabellen nicht möglich.

Dies lässt sich allgemein sagen für Transformationen von Farbdaten aus den n Farben eines Quell-Farbraumes in die m Werte eines Ziel-Farbraumes, wenn Kombinationen der Farbdaten aus den n Farben des Quell-Farbraumes sowohl Anteile bzw. Untergruppen umfassen, für welche Transformationstabellen vorliegen, als auch solche, für welche keine Transformationstabellen vorliegen.

Die US 2011/0007332 offenbart ein Verfahren, um Transformationen von n > 4 Farben zu ermöglichen, bei dem neben den genauen 4-farbigen Transformationen auch grob aufgelöste n-farbige Transformationsdaten vorliegen müssen. Das Verfahren benutzt mehrere Interpolationen, um zuerst ein grobes Ergebnis aus der groben n-dimensionalen Tabelle zu gewinnen und dieses durch Kombination mit Interpolationen in den genauen 4-farbigen Tabellen und weiteren Interpolationen der Zwischenergebnisse zu verbessern. Ohne die n-farbige Transformationstabelle kann das Verfahren nicht angewendet werden. Deren Erzeugung ist aber sehr aufwändig, etwa wenn sie, wie dort vorgeschlagen, auf einige Messungen an Drucken mit vielen Farben basieren, deren Herstellung für jede Farbkombination passende Druckformen und Rüstzeiten erfordert, und die bei der Vielzahl von üblichen Sonderfarben, wie oben beschrieben, sehr unwirtschaftlich ist. Es ist wünschenswert, auch ohne die Kenntnis von n-farbigen Tabellen auszukommen.

Ausgehend vom vorbeschriebenen Stand der Technik liegt der Erfindung die Aufgabe zugrunde, ein Verfahren zur Durchführung von Farbraumtransformationen unter Nutzung von Transformationsvorschriften dahingehend zu verbessern, dass auch Kombinationen von Farbdaten aus den n Farben des Quell-Farbraumes, die sowohl Anteile bzw. Untergruppen umfassen, für welche Transformationstabellen vorliegen, als auch solche, für welche keine Transformationstabellen vorliegen, mit hoher Genauigkeit so in die m Werte des Ziel-Farbraums transformiert werden können, dass ein der Vorlage möglichst nahe kommendes Ergebnis erzielt werden kann.

Die technische Lösung dieser Aufgabe besteht in einem Verfahren mit den Merkmalen des Patentanspruches 1. Weitere Vorteile und Merkmale ergeben sich aus den Unteransprüchen.

Die Erfindung stellt ein schnelles Schätzverfahren dar, das Mischungen aus bekannten Teilkomponenten zusammensetzt. Wenn z. B. die Eingabe nach einer Mischung CMYKO verlangt, aber nur Interpolationstabellen oder ICC-Farbprofile für CMYK sowie für OMYK vorliegen, werden die Einträge geschickt kombiniert.

Erfindungsgemäß wird ein Verfahren zur Durchführung von Transformationen von Farbdaten von einem Quell-Farbraum mit n Farben in einen Ziel-Farbraum mit m Werten unter Nutzung einer Transformationsvorschrift TRV vorgeschlagen, wobei eine Farbe i eine der n Farben des Quell-Farbraumes ist und den Farbanteilen der Farben q(1), q(2), ..., q(n) zumindest für einige Kombinationen der n Farben des Quell-Farbraumes Werte z(1), z(2), ..., z(m) des Ziel-Farbraumes zugeordnet sind, gekennzeichnet durch folgende Schritte:
a) für eine Kombination KB der n Farben des Quell-Farbraumes mit Farbanteilen q^{KB}(1) bis q^{KB}(n), für die über die TRV keine Kombination der m Komponenten z^{KB}(1) bis z^{KB}(m) des Ziel-Farbraumes zugeordnet ist, eine Farbe i der Kombination KB auswählen, die einen Farbanteil FA = q^{KB}(i) > 0 besitzt, und für die folgende Bedingungen gelten:
   i) der verbleibenden Kombination der Farbanteile q^{KB}(j ungleich i) ohne den Anteil der Farbe i ist eine Kombination des Ziel-Farbraumes mit Komponenten z(1)ⁱ, z(2)ⁱ, ..., z(m)ⁱ zugeordnet, und
   ii) zwei weitere, mit einer Ausnahme zueinander identische Kombinationen von Farbanteilen q(1) bis q(n) existieren, denen jeweils eine Kombination von Komponenten z(1) bis z(m) zugeordnet ist und wobei die beiden Kombinationen von Farbanteilen q(1)¹ bis q(n)¹ und q(1)² bis q(n)² sich nur dadurch unterscheiden, dass der Farbanteil q(i) der Farbe i in der einen q(i)¹ = FA > 0 und in der anderen q(i)² = 0 ist, so dass
      1) der Kombination q(1)¹ bis q(n)¹ mit Farbanteil q(i)¹ = FA eine entsprechende Kombination der Komponenten z(1)¹, z(2)¹, ..., z(m)¹ der m Werte des Ziel-Farbraumes zugeordnet ist, die den Farbdatensatz Z1 bildet, und
      2) der Kombination q(l)² bis q(n)² mit Farbanteil q(i)² = 0 eine entsprechende Kombination der Komponenten z(1)², z(2)², ..., z(m)² der m Werte des Ziel-Farbraumes zugeordnet ist, die den Farbdatensatz Z2 bildet,
   iii) Berechnen der Verhältnisse V(1)ⁱ, V(2)ⁱ, ..., V(m)ⁱ jeder Komponente z(l)¹, z(2)¹, ..., z(m)¹ der m Werte des Farbdatensatzes Z1 zu der jeweiligen Komponente z(1)², z(2)², ..., z(m)² der m Werte des Farbdatensatzes Z2, welche einen Satz von Faktoren V(1)ⁱ = z(1)¹/z(1)², V(2)ⁱ =z(2)¹/z(2)², ..., V(m)ⁱ =z(m)¹/z(m)² bilden,
b) Anwenden der Faktoren V(1)ⁱ, V(2)ⁱ, ..., V(m)ⁱ bei Transformationen von Kombinationen KB von Farben des Quell-Farbraumes mit n Farben, welche den Farbanteil FA der Farbe i enthalten, wobei jedoch für die Transformation der Farbanteil q(i) = 0 gesetzt wird, in den Ziel-Farbraum mit m Komponenten, indem die sich bei der Transformation ergebenden z(1)ⁱ, z(2)ⁱ, ..., z(m)ⁱ des Ziel-Farbraumes mit den jeweiligen Faktoren V(1)ⁱ, V(2)ⁱ, ..., V(m)ⁱ multipliziert werden.

Die zugrunde liegende Idee ist, die Ausgabewerte für eine unbekannte Eingabekombination schrittweise aus den Ausgabewerten von bekannten Eingabekombinationen zu konstruieren, wobei in jedem Schritt die farbliche Auswirkung (auf die Ausgabewerte) von hinzugefügten Eingabefarben geschätzt und dieser Beitrag auf eine Weise hinzugerechnet wird, die unten genauer ausgeführt wird.

In einer bekannten Eingabe-Farbkombination, d. h. für die Ausgabe-Farbwerte z. B. durch Tabelle oder Interpolation vorliegen, wird der gesuchte Beitrag von Teilfarben innerhalb dieser Farbkombination wie folgt bestimmt. Die Eingabekombination "AB" wird zerlegt in den Beitrag der Teilfarben "A" und den Beitrag der restlichen Farben "B", mit dem Ziel, die farbliche Wirkung von "A" relativ zur Basis "B" zu beschreiben, um sie dann auf eine andere Basis "C" anwenden zu können, um eine unbekannte Kombination "AC" zu schätzen.

In dem hier vorgeschlagenen Lösungsansatz wird die Mischung AB als Überlagerung von zwei Ebenen A und B angesehen und die etablierten "Blending Modes" der Computergraphik benutzt (W3C, PDF, Photoshop). Der wichtigste Blending Mode ist "Multiply". Zugrunde liegen lineare Farbwerte, hier kurz "Linearwerte", normiert zwischen 0 und 1. "Multiply" multipliziert die Linearwerte zweier Ebenen in einem lichtbezogenen Farbraum (in der Computergraphik ist das oft RGB), um die abdunkelnde, einfärbende Überlagerung der Farben zu simulieren. Der Effekt ist ähnlich einem Überdruck.

Dann gilt: Linearwerte der Mischung AB = (Linearwerte von A) * (Linearwerte von B). Nach dem gesuchten farblichen Beitrag von A, also dem Faktor "Linearwerte von A", kann aufgelöst werden. Die Linearwerte von AB und B sind beide aus der AB enthaltenden Tabelle bekannt. In einer optischen Analogie verhalten sich die Linearwerte von A wie ein Transmissionsfaktor der hinzugefügten Farben, angewendet auf die Linearwerte der Basis B.

Bei linearen lichtbezogenen Ziel-Farbräumen wie CIEXYZ und Reflexionsspektren können deren Ausgabewerte direkt als Linearwerte übernommen werden, für CIELAB wird zuerst in CIEXYZ umgewandelt, in CIEXYZ gerechnet, und am Ende der Berechnungen zurückkonvertiert.

Für nichtlineare RGB-Ziel-Farbräume wird in deren linearisierten Domänen gerechnet, z. B. wird im Falle von gamma-basierten RGB-Farbräumen mit Werten von 0 bis 1 die Nichtlinearität durch Potenzieren mit gamma entfernt, die so linearisierten RGB-Linearwerte werden verwendet, zum Schluss kehrt man in den nichtlinearen RGB-Raum durch Potenzieren mit 1/gamma wieder zurück.

In einem druckfarbenbezogenen Ziel-Farbraum werden die Druckfarbwerte x zwischen 0-100% zu ihren komplementären Werten umgekehrt (1-x) und analog zum RGB-Fall linearisiert und nach der Verrechnung wieder de-linearisiert. Diese komplementären Werte sind die Linearwerte für Multiply. Die Berechnung mit Druckfarbwerten entspricht damit formelmäßig dem Blending Mode "Screen", auch "inverses Multiplizieren" genannt. Dies folgt der in PDF üblichen Verarbeitung für RGB bzw. DeviceCMYK (Adobe, PDF Blend Modes, Addendum to PDF Reference 5th edition, version 1.6, 2006, S. 2, S. 6). Die komplementären Werte verhalten sich wieder wie Transmissionsfaktoren, die Druckfarbenbeiträge selbst daher wie Absorptionen.

Dieser Ansatz ist ähnlich zu dem bekannten Konzept der Farbannahmeformel im Druck nach Preucil, bei dem die linearen Farbwerte, hier die Reflexionswerte, der zuerst gedruckten Farbe B und der darauf aufgedruckten Farbe A einzeln sowie im Zusammendruck AB gemessen werden, und letztere Messung mit dem Produktansatz AB ≈ A^{fa} * B approximiert wird, hier um den unbekannten Farbannahmefaktor "fa" zu bestimmen, der eine Modifikation von A um eine meist reduzierte Schichtdicke < 1 vornimmt. Die Erfindung nutzt dagegen die bekannten Linearwerte von AB und B, um die farbliche Wirkung von A aus dem Ansatz AB = A * B zu bestimmen.

Hiermit ist ein Verfahren vorgeschlagen, die farbliche Wirkung von manchen Farben A innerhalb einer bekannten Kombination AB zu bestimmen und auf andere Farben C anzuwenden, um die Ausgabewerte für eine Kombinationen AC zu schätzen.

In der einfachsten Form kann man für jede Eingabefarbe getrennt ihre Wirkung auf das Substrat beschreiben, indem man die Ausgabewerte des Eingabefarbwertes mit den Ausgabewerten des Substrates (Eingabefarbwert Null) vergleicht. Der Unterschied in den Ausgabewerten ist ein Maß für die farbliche Wirkung der Eingabefarbe in ihrer durch den Wert beschriebenen Menge. Alle diese Wirkungen werden dann zusammengerechnet.

Durch den weiteren erfindungsgemäßen Vorschlag wird das Schätzen einer Farbkombination durch schrittweises Hinzufügen von Einzelfarben zum Substrat aber deutlich verbessert, indem man in Druckreihenfolge vorgeht, also so, wie die einzelnen Druckfarben nacheinander auf das Substrat aufgebracht werden, und prozesstypische Farbannahme-Eigenschaften berücksichtigt, die z. B. bekanntermaßen etwa 75% für den Nass-in-Nass-Überdruck von Volltönen im Offsetdruck betragen, indem man die Transmissionsfaktoren, also die Linearwerte, mit der Farbannahme exponentiell korrigiert.

Wenn andererseits nicht nur Einzelfarben, sondern auch Farbkombinationen in Unterraumtabellen bekannt sind, ist es nach einem erfindungsgemäßen Vorschlag besser, das Zusammenwirken von einer Gruppe von möglichst vielen Teilfarben der Eingabekombination direkt aus vorhandenen Tabellen als bekannte Ausgabewerte abzulesen, statt es aus Einzelfarben zu schätzen. Zu Anfang wählt man eine Gruppe von Farben aus, für eine Unterraumtabelle vorhanden ist, zum Beispiel derart, dass deren Eingabefarbwerte einen möglichst großen Anteil der gesamten Eingabekombination bereits abdecken. Dann identifiziert man zum Beispiel aus der verbleibenden Eingabefarben diejenige, deren Eingabefarbwert den größten Anteil in der Kombination hat, und wählt eine Unterraumtabelle aus, die diese Farbe enthält (idealerweise mit großem Überlapp zu den schon bekannten Farben). Für diesen Unterraum bestimmt man die farbliche Wirkung dieser Farbe, indem man die Ausgabefarbwerte mit dieser Farbe sowie ohne diese Farbe abliest und wieder vergleicht. Der Unterschied ist wieder ein Maß dafür, was geschieht, wenn man diese Farbe in dem gegebenen Farbwert hinzugibt. Also wendet man diesen Unterschied auf die Ausgabewerte der Anfangs-Farbgruppe an und hat somit eine Farbe hinzugefügt. Das ist die neue Anfangskombination für den nächsten Schritt, in dem die nächste verbleibende Farbe identifiziert und hinzugefügt wird, bis alle Farben der Eingabekombination enthalten sind.

Das erfindungsgemäße Verfahren wird verallgemeinert wie folgt vorgeschlagen:
Für eine gegebene Eingabe werden Farbgruppen gesucht, für die eine Transformation vorliegt, etwa als Tabelle, und die einen Teil der Eingabekombination enthalten. (Die vollständige Kombination ist nicht enthalten, für sie soll geschätzt werden.) Dieser Satz von Farbgruppen wird schrittweise verarbeitet. Zum Beispiel wird eine Farbgruppe als Startpunkt gewählt und im ersten Schritt eine zweite ausgewählt, mit der eine Eingabefarbe hinzugefügt werden soll. In weiteren Schritten werden weitere Farbgruppen ausgewählt, bis alle in der Eingabe vorkommenden Farben hinzugefügt wurden.

Pro Schritt geschieht folgendes: Zuerst werden die gemeinsamen Druckfarben (Schnittmenge) von den am Schritt beteiligten Farbgruppen identifiziert - das sind mindestens zwei, maximal der gesamte Satz. Falls es keine gemeinsamen Druckfarben gibt, ist die Schnittmenge das unbedruckte Substrat, also der Null-Eintrag in der Tabelle.

Jede Farbgruppe des Schrittes enthält also zum einen die gemeinsamen Druckfarben, aber auch zusätzliche. Für jede Farbgruppe werden diese zusätzlichen, d. h. die nicht gemeinsamen Druckfarben identifiziert.

Für jede Farbgruppe wird der enthaltene Teil der Eingabe als eine Mischung angesehen. Die Mischung wird zerlegt in den Beitrag der gemeinsamen Farben, der die "Basis" im obigen Rechenweg darstellt, und den Beitrag der zusätzlichen ("hinzugefügten") Farben. Damit erhält man ein Maß für deren farbliche Wirkung (relativ zur Basis).

Auf diese Weise wird im Ziel-Farbraum der Ausgabefarben für jede Gruppe der farbliche Beitrag eines Farbanteils A in einer Mischung AB relativ zu einer Basis B bestimmt. Entscheidend ist, dass dieser Beitrag anschließend auf andere Basen angewendet, also zusammengesetzt werden kann. Es stehen also für jede beteiligte Farbgruppe die Beiträge der gemeinsamen Farben als Basis und der zusätzlichen Farben als Ergänzung fest. Nun können die Beiträge der Ergänzungen auf die anderen Farbgruppen in diesem Schritt angewendet werden. Damit werden eine oder mehrere Schätzungen für eine zuvor unbekannte Farbmischung erhalten.

Wenn in einem Schritt mehrere Zerlegungen geschehen sind und daher alternative kombinatorische Wege der Zusammensetzung möglich sind, werden diese gewichtet zu einem Endergebnis des Schrittes gemittelt, wobei ein sinnvolles Gewicht die relative Sicherheit der Schätzung ist (etwa die Entfernung von den als bekannt angesehenen Teilergebnissen). Unten wird in einem Beispiel erklärt, dass damit die Qualität der Transformationsergebnisse von Farbübergängen steigt, weil Sprünge vermieden werden.

Mit der Mittelung ist ein Schritt abgeschlossen. Das Endergebnis des Schrittes wird als neu erzeugte, durch die Schätzung nun bekannte Farbgruppe im nächsten Schritt mit weiteren Farbgruppen verrechnet, die ihrerseits weitere Eingabefarben einbringen, bis schließlich die Kombination aller Eingabefarben geschätzt ist. So werden Mischungen schrittweise bis zur vollständigen Eingabe zusammengesetzt.

Im nun folgenden Beispiel mit den Farbgruppen CMYK und OMYK werden verschiedene Strategien gezeigt, die unterschiedliche Kompromisse zwischen Effizienz und Genauigkeit darstellen. Weitere Strategien sind allein aufgrund der Kombinatorik der Zerlegungen denkbar, diese Ausführung ist nicht beschränkend.

Gewünscht sei als Eingabe eine Farbkombination von CMYK+O mit Anteilen 30% C, 60% M, 10 % Y, 20 % K, 50 % O. Es gebe Tabellen für CMYK und für MYKO, aber keine Tabelle für CMYKO. Zur Vereinfachung sei angenommen, dass die Tabellen bereits lichtbezogene lineare Ausgabewerte enthalten.

Am schnellsten wäre es, die ersten vier Farben, die CMYK-Farbgruppe, direkt zu benutzen und nur noch den Beitrag der fehlenden Farben (hier nur Orange) dazu zu mischen.

Also werden zuerst die Ausgabewerte der CMYK-Farbgruppe 30% C, 60% M, 10 % Y, 20 % K abgelesen.

Der noch fehlende farbliche Beitrag von 50% O wird so ermittelt:
Die gemeinsamen Farben von CMYK und MYKO sind MYK. Die zusätzliche Farbe von CMYK ist C, die von MYKO ist O. MYK wird als Basis B mit den Werten 60% M, 10% Y, 20 %K genommen, die Ausgabewerte abgelesen, und ebenso die Ausgabewerte der Mischung AB mit den Werten 60% M, 10 % Y, 20 % K, 50 % O. Der Transmissionsfaktor, um den die Zugabe der Farbmenge A von 50% O die Basis verändert, ist der Quotient der Ausgabewerte von AB und B.

Dieser Faktor wird angewendet (multipliziert) auf die obige Ablesung der Ausgabewerte der CMYK-Farbgruppe 50% C, 60% M, 10 % Y, 20 % K und liefert das gewünschte Ergebnis der Gesamtfarbwerte von CMYKO.

Der Vorteil dieses Verfahrens ist, dass man ohne Entscheidungen sequentiell von links nach rechts durchgehen kann, den ersten tabellarisch vorhandenen Farbwert abliest und alle weiter rechts noch hinzukommenden Farben als relative Faktoren aus ihren eigenen Tabellen (A = AB / B) anwendet.

Eine Alternative besteht darin, statt der gemeinsamen Farben (hier MYK) für B nur das unbedruckte Substrat zu verwenden, dann ist AB = A = dem Tabellenwert von 50% O, und die Wirkung von 50% O ist der Quotient aus dem Tabellenwert von 50% O und dem Tabellenwert des unbedruckten Papiers.

Man kann sich aber vorstellen, dass ein Orange sich auf weißem Papier anders auswirkt als im Beisein vieler anderer Farben. Gesucht wird die Wirkung im Beisein von 30+60+10+20% CMYK-Farbmenge. Diese ist unbekannt, es gibt keine Tabelle dafür. Um diese realistisch zu schätzen, liegt es nahe, nicht die womöglich starke Wirkung von 50% O auf Papier, sondern die vermutlich anders geartete Wirkung von 50% O auf eine 60+10+20% MYK-Farbmenge zu benutzen.

Um die Genauigkeit zu steigern, wird die Größe der hinzuzufügenden Beiträge beachtet. Es ist vermutlich ungenauer, eine große Farbmenge 50% O hinzuzugeben, als eine kleinere Farbmenge 30% C. Anders ausgedrückt, würde man mit MYKO 60+10+20+50 beginnen, ergeben sich bereits 140% Farbauftrag als sicheres Wissen aus der Tabelle, gegenüber nur 120% Farbauftrag aus CMYK 30+60+10+20 oben. Diese Verbesserung erkauft man mit einen zusätzlichen Sortierungsschritt.

Dieses größenabhängige Verfahren enthält dann aber immer noch eine Vorzugsreihenfolge, die dann zum Problem wird, wenn in einem Verlauf zwei Werte sich angleichen. Angenommen, Cyan würde Pixel für Pixel von 30% auf über 50% ansteigen. Die größenabhängige Sortierung würde für die ersten Pixel MYKO als Basis wählen und den kleineren C-Wert hinzufügen. Sobald C gleich groß oder minimal größer ist, würde die Basis wechseln zu CMYK, weil nun der O-Beitrag der kleinere ist. Im Allgemeinen entsteht ein Sprung, weil das Ergebnis aus Basis CMYK + Beitrag 50% O ungleich dem Ergebnis aus Basis MYKO + Beitrag 50% C ist. Dieser Sprung ist ein unerwünschtes Artefakt.

Eine weitere Erhöhung der Qualität würde wie beschrieben daher beide Kombinationen von Basis + Beitrag benutzen und gewichtet mitteln. Dann ist der Übergang garantiert stetig.

Ein weiteres Beispiel konkretisiert den Ablauf des erfindungsgemäßen Verfahrens. Die Eingabe-Farbdaten sind aus einem Quell-Farbraum mit 4 Farbanteilen q(1), q(2), q(3), q(4). Diese sollen in einen Zielfarbraum mit 3 Farbwerten z(1), z(2), z(3) transformiert werden.

Es stehen folgende Transformations-Zuordnungen für Kombinationen von Farbanteilen des Quell-Farbraumes zu Verfügung: T(1) [q(1), q(2), q(3)], T(2) [q(1), q(2), q(4)], T(3) [q(1), q(3), q(4)], T(4) [q(2), q(3), q(4)], T(5) [q(3), q(4)].

Der Eingabe-Datensatz umfasse folgende Werte für q(1), q(2), q(3), q(4):

| | | | |
|---|---|---|---|
| 20 | 40 | 60 | 80 |

Zuerst ist eine Farbe i zu wählen. Die erforderlichen Zuordnungs-Bedingungen sind für alle Farben 1-4 erfüllt. Gewählt wird die Farbe 1, weil ihr Farbanteil q(1) der kleinste ist und daher ein vermutlich kleinerer Einfluss geschätzt werden muss und auf eine große, bekannte Ziel-Farbkombination der Farbanteile der Farben 2-4 angewendet werden wird.

Zunächst wird die Werte-Kombination Zⁱ (ohne Farbanteil der Farbe i=1)

| | | | | | | |
|---|---|---|---|---|---|---|
| 0 | 40 | 60 | 80 | bestimmt, für die es die T(4) gibt. Diese betrifft die Paarungen der größten Werte. Diese führt zu den Werten z(l)ⁱ, z(2)ⁱ, z(3)ⁱ | | |
| 0 | 40 | 60 | 80 | 22,763 | 19,558 | 6,670 |

Dies ist die Basis. Der Einfluss des Farbanteils FA = q(1) = 20 wird nun ermittelt.

Zur Bestimmung des Einflusses von q(1) wird die Werte-Kombination mit q(1) = FA

| | | | | | | |
|---|---|---|---|---|---|---|
| 20 | 0 | 60 | 80 | gewählt, für die es die T(3) gibt. Diese führt zu den Werten z(l)¹, z(2)¹, z(3)¹ (Farbdatensatz Z1) | | |
| 20 | 0 | 60 | 80 | 29,779 | 22,759 | 5,153 |

Dann wird die Werte-Kombination gewählt, bei der q(1) = 0 ist, die anderen gleich, also

| | | | | | | |
|---|---|---|---|---|---|---|
| 0 | 0 | 60 | 80 | , für die es die T(5) gibt. Diese führt zu den Werten z(1)², z(2)², z(3)² (Farbdatensatz Z2) | | |
| 0 | 0 | 60 | 80 | 42,435 | 31,883 | 6,821 |

Es werden die Verhältnisse Vⁱ der beiden Werte-Reihen zueinander gebildet:

| | | |
|---|---|---|
| 0,701 | 0,714 | 0,755 |

Diese Faktoren Vⁱ werden nun bei der Transformation angewendet. Damit wird aus der Basis

| | | | | | | |
|---|---|---|---|---|---|---|
| 0 | 40 | 60 | 80 | 22,763 | 19,558 | 6,670 |

durch Multiplikation das Ergebnis der gesuchten z(1), z(2), z(3) mit den Faktoren

| | | | | | | |
|---|---|---|---|---|---|---|
| 20 | 40 | 60 | 80 | 15,948 | 13,961 | 5,039. |

Die Erfindung beschreibt eine für den Fachmann praktikable und umsetzbare Lösung, mit welcher selbst bei sehr hoher Auflösung eines Layouts und einer großen Anzahl von Eingabefarben eine ausreichend schnelle und qualitativ hochwertige Farbraumtransformation in den Farbraum des konkreten Druck-Systems möglich ist.

Weitere Vorteile und Merkmale ergeben sich aus der folgenden Beschreibung anhand der Figuren. Dabei zeigen:
- Figur 1: ein Flussdiagramm zur Erläuterung der Verfahrensschritte.
- Figur 2: ein Flussdiagramm für das Schätzen mehrerer fehlender Farben.
- Figur 3: das Zustandekommen von mehr als 4-dimensionalen Farbdaten.

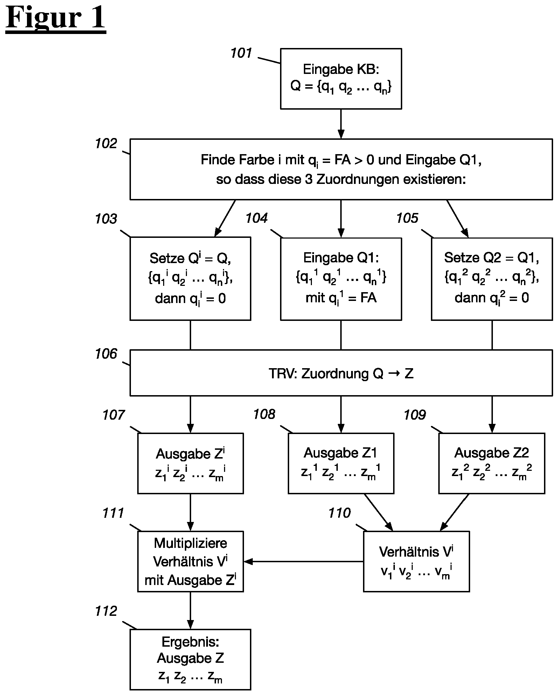

Gemäß Figur 1 gibt es eine Eingabe-Kombination KB von Farbdaten 101 mit Farbanteilen Q = { q(1), q(2), ..., q(n) } aus dem Quell-Farbraum mit n Farben, die in den Ziel-Farbraum mit Kombinationen von m Werten zu transformieren ist. Die nicht verschwindenden Farbanteile dieser Kombination bilden eine sogenannte Farbgruppe. Im Schritt 102 wird aus dieser Farbgruppe eine Farbe i gesucht, deren Farbanteil also FA = q(i) > 0 ist, und für die bestimmte Bedingungen gelten:
1) für die Teilmenge Qⁱ (103) der Farbdaten 101, bei der der Farbanteil q(i)¹ = 0 gesetzt ist, muss durch die Transformationsvorschrift TRV 106 eine Ausgabe Zⁱ (107) aus dem Ziel-Farbraum zugeordnet sein, die also das Transformationsergebnis einer Farbgruppe ohne die Farbe i beschreibt, welches später um den Einfluss der Farbe i ergänzt werden soll.
2) Es muss eine andere Eingabe Q1 (104) existieren, für die q(i)¹ = FA ist, und die ansonsten beliebig ist, der durch die Transformationsvorschrift TRV 106 eine Ausgabe Z1 (108) zugeordnet ist, die also das Transformationsergebnis dieser anderen Eingabe mit dem gleichen Farbanteil FA der Farbe i beschreibt.
3) Passend dazu wird eine Eingabe Q2 (105) gebildet, die mit Q1 identisch ist bis auf den Anteil der Farbe i, der q(i)² = 0 ist, und der durch die Transformationsvorschrift TRV 106 eine Ausgabe Z2 (109) zugeordnet ist, die also das Transformationsergebnis dieser anderen Eingabe ohne den Einfluss von Farbe i beschreibt.

Wenn diese Farbe i existiert, wird nun der Einfluss ihres Farbanteils FA aus dem Verhältnis Vⁱ (110) des Ausgabe-Paares Z1 und Z2 mit und ohne Farbanteil FA geschätzt. Dieser Einfluss kann auf alle Kombinationen mit Farbanteil q(i) = FA angewendet werden, für die ohne FA eine Zuordnung besteht, insbesondere natürlich auf die Eingabe-Kombination KB. Dazu wird im Schritt 111 die Ausgabe Zⁱ ohne den Beitrag der Farbe i komponentenweise mit dem Verhältnis Vⁱ (110) multipliziert. Dadurch ist das gesuchte Ergebnis 112 gebildet, welches die Schätzung der Ziel-Farbwerte für die gesamte Farbgruppe Eingabe-Kombination KB ist.

Mit anderen Worten wird die Farbgruppe der Eingabekombination verkleinert, indem Farbe i entfernt wird, unter der Bedingung, dass dieser kleineren Farbgruppe eine Ausgabe zugeordnet ist, und dann wird die Farbe i durch Schätzung hinzugefügt, so dass die ursprüngliche Farbgruppe wieder komplett ist. Diese Verkleinerung kann erfindungsgemäß auch mehrfach durchgeführt werden, so dass man spätestens nach n Schritten bei der leeren Farbgruppe ankommt, dem unbedruckten Substrat, für das eine Zuordnung leicht bestimmbar ist. Von dort aus kann man notfalls jede einzelne Farbe schrittweise hinzufügen bis zur vollständigen Farbgruppe, wie es Figur 2 zeigt.

Gemäß Figur 2 gibt es Farbdaten 201 aus dem Quell-Farbraum mit n Farben, die zu transformieren sind und die Eingabe darstellen. Im Schritt 202 wird eine Farbgruppe gesucht, für die Zielfarbdaten 203 in der Transformationsvorschrift vorliegen. Diese Farbgruppe ist eine Teilmenge der Farbdaten 201 und soll schrittweise zu der vollständigen Menge ergänzt werden, wobei gleichzeitig auch die Zielfarbdaten 203 zu der vollständigen Ausgabe ergänzt werden. Wenn in Schritt 204 die aktuelle Farbgruppe bereits vollständig ist, ist die Ausgabe 205 fertig. Ansonsten wird in Schritt 206 eine der noch fehlenden Farben i ausgewählt. Für diese wird nun ein Paar von zwei Farbdatensätzen Q1 und Q2 ausgewählt, und zwar im Schritt 207 ein Farbdatensatz Q1, welcher den gegebenen Farbanteil FA = q(i) der Farbe i enthält, und für den eine Kombination der m Werte z(l)¹, z(2)¹, ..., z(m)¹ des Ziel-Farbraumes vorliegt, die den Farbdatensatz Z1 bilden (208), sowie im Schritt 209 der Farbdatensatz Q2, welcher für alle Farben außer Farbe i die gleichen Farbanteile wie Q1 enthält, während der Anteil der Farbe i gleich 0 ist, und für den eine Kombination der m Werte z(1)², z(2)², ..., z(m)² des Ziel-Farbraumes vorliegt, die den Farbdatensatz Z2 bilden (210). Beide ausgewählte Datensätze, die Farbgruppe mit Anteil von i und die Farbgruppe ohne Anteil von i, sind Farbdaten der n Farben des Quell-Farbraumes. Im Schritt 211 werden komponentenweise die Verhältnisse der m Werte des Farbdatensatzes Z1 (108) zu den m Werten des Farbdatensatzes Z2 (210) berechnet. Diese Verhältnisse Vⁱ werden in Schritt 212 als geschätzte Wirkung der Farbe i komponentenweise auf die aktuelle Ausgabe angewendet, und die Farbe i wird der aktuellen Farbgruppe hinzugefügt (213). Das wird gegebenenfalls wiederholt, bis die Farbgruppe vollständig ist und damit das Ergebnis der Transformation 205 vorliegt.

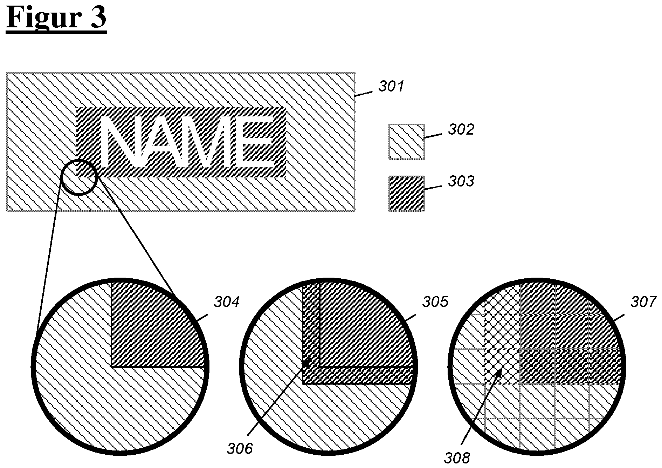

Figur 3 illustriert das bekannte Zustandekommen von mehr als 4-farbigen Überdrucken, obwohl die einzelnen Objekte nicht mehr als 4 Farben benutzen, in Ergänzung der Beschreibung auf Seite 7. Gezeigt wird ein stilisiertes Verpackungsdesign 201 mit einer Bildfläche 202, die 4-farbig in CMYK aufgebaut ist und einer Logo-Fläche 203 mit einer Sonderfarbe. Die vergrößerte Ansicht 204 des Designs zeigt, dass die Konturen von CMYK-Bild und Sonderfarben-Rechteck nicht überlappen, nur aneinanderstoßen. Im Design gibt es also keine 5-farbigen Bereiche. Erst die sogenannte Überfüllung 205 in der Druckproduktion, die wie beschrieben eingesetzt wird, um passerbedingte Blitzer zu vermeiden, vergrößert eine der Konturen und erzeugt dadurch überdruckende Bereiche 206 von der Sonderfarbe mit CMYK, wo nunmehr 5 Farben gleichzeitig erscheinen. Unabhängig davon können auch durch Rasterung mit Antialiasing 207 Rasterpunkte aus Anteilen der zu ihnen gehörenden Bereiche gemischt werden, so dass weitere 5-farbige Pixel 208 mit CMYK- und Sonderfarbanteilen entstehen.

## Patentansprüche

1. Verfahren zur rechnergestützten Durchführung von Transformationen von Farbdaten von einem Quell-Farbraum in einen Ziel-Farbraum unter Nutzung einer Transformationsvorschrift TRV, wobei
• der Quellfarbraum n Farben umfasst, die in jedem darzustellenden Punkt in Kombinationen von Farbanteilen q(1) bis q(n) vorliegen,
• der Zielfarbraum m Werte umfasst, die zu Kombinationen von Komponenten z(1) bis z(m) kombinierbar sind,
• über die Transformationsvorschrift TRV zumindest einigen Kombinationen der n Farben des Quell-Farbraumes Kombinationen der m Komponenten des Ziel-Farbraumes zugeordnet sind,
**gekennzeichnet durch** folgende Schritte:
a) für eine Kombination KB der n Farben des Quell-Farbraumes mit Farbanteilen q^{KB}(1) bis q^{KB}(n), für die über die TRV keine Kombination der m Komponenten z^{KB}(1) bis z^{KB}(m) des Ziel-Farbraumes zugeordnet ist, eine Farbe i der Kombination KB auswählen, die einen Farbanteil FA = q^{KB}(i) > 0 besitzt, und für die folgende Bedingungen gelten:
i) der verbleibenden Kombination der Farbanteile q^{KB}(j ungleich i) ohne den Anteil der Farbe i ist eine Kombination des Ziel-Farbraumes mit Komponenten z(1)ⁱ, z(2)ⁱ, ..., z(m)¹ zugeordnet, und
ii) zwei weitere, mit einer Ausnahme zueinander identische Kombinationen von Farbanteilen q(1) bis q(n) existieren, denen jeweils eine Kombination von Komponenten z(1) bis z(m) zugeordnet ist und wobei die beiden Kombinationen von Farbanteilen q(1)¹ bis q(n)¹ und q(l)² bis q(n)² sich nur dadurch unterscheiden, dass der Farbanteil q(i) der Farbe i in der einen q(i)¹ = FA > 0 und in der anderen q(i)² = 0 ist, so dass
1) der Kombination q(1)¹ bis q(n)¹ mit Farbanteil q(i)¹ = FA eine entsprechende Kombination der Komponenten z(l)¹, z(2)¹, ..., z(m)¹ der m Werte des Ziel-Farbraumes zugeordnet ist, die den Farbdatensatz Z1 bildet, und
2) der Kombination q(l)² bis q(n)² mit Farbanteil q(i)² = 0 eine entsprechende Kombination der Komponenten z(1)², z(2)², ..., z(m)² der m Werte des Ziel-Farbraumes zugeordnet ist, die den Farbdatensatz Z2 bildet,
iii) Berechnen der Verhältnisse V(1)ⁱ, V(2)ⁱ, ..., V(m)ⁱ jeder Komponente z(l)¹, z(2)¹, ..., z(m)¹ der m Werte des Farbdatensatzes Z1 zu der jeweiligen Komponente z(1)², z(2)², ..., z(m)² der m Werte des Farbdatensatzes Z2, welche einen Satz von Faktoren V(1)ⁱ = z(1)¹/z(1)², V(2)ⁱ =z(2)¹/z(2)², ..., V(m)ⁱ =z(m)¹/z(m)² bilden,
b) Anwenden der Faktoren V(1)ⁱ, V(2)ⁱ, ..., V(m)ⁱ bei Transformationen von Kombinationen KB von Farben des Quell-Farbraumes mit n Farben, welche den Farbanteil FA der Farbe i enthalten, wobei jedoch für die Transformation der Farbanteil q(i) = 0 gesetzt wird, in den Ziel-Farbraum mit m Komponenten, indem die sich bei der Transformation ergebenden z(1)ⁱ, z(2)ⁱ, ..., z(m)ⁱ des Ziel-Farbraumes mit den jeweiligen Faktoren V(1)ⁱ, V(2)ⁱ, ..., V(m)ⁱ multipliziert werden.

2. Verfahren nach Anspruch 1, **dadurch gekennzeichnet, dass** das Verfahren bei einer gegebenen Kombination der n Farben mit Kombinationen von Farbanteilen q(1) bis q(n) auf Teilkombinationen von k<n Farben angewendet wird.

3. Verfahren nach Anspruch 2, **dadurch gekennzeichnet, dass** das Verfahren auf aufeinander aufbauende Teilkombinationen mit k<n Farben bis k=n angewendet wird, wobei die sich ergebenden Faktoren multiplikativ angewendet werden.

4. Verfahren nach einem der vorhergehenden Ansprüche, **dadurch gekennzeichnet, dass** die Größe des Farbanteils einer Farbe zur Erzielung einer höheren Genauigkeit berücksichtigt wird, indem aus den möglichen Farben i diejenige mit kleinerem Farbanteil bevorzugt ausgewählt wird.

5. Verfahren nach einem der vorhergehenden Ansprüche, **dadurch gekennzeichnet, dass** für mehrere verschiedene mögliche Farben i1, i2, ... die Ergebnisse der verschiedenen Schätzungen z(1)ⁱ¹, ..., z(m)ⁱ¹ sowie z(1)ⁱ², ..., z(m)ⁱ² usw. gewichtet gemittelt werden, wobei das Gewicht jeder Schätzung umso größer gewählt wird, je kleiner der jeweilige Farbanteil q(i1), q(i2), ... der Farbe ist.

6. Verfahren nach einem der vorhergehenden Ansprüche, **dadurch gekennzeichnet, dass** die Komponenten z(1) bis z(m) des Ziel-Farbraumes geräteabhängige Werte sind.

7. Verfahren nach Anspruch 1 bis 5, **dadurch gekennzeichnet, dass** die Komponenten z(1) bis z(m) des Ziel-Farbraumes geräteunabhängige Werte sind.

8. Verfahren nach einem der vorhergehenden Ansprüche, **dadurch gekennzeichnet, dass** die Transformationsvorschrift TRV in Form von Transformationstabellen vorliegt.

9. Verfahren nach einem der vorhergehenden Ansprüche, **dadurch gekennzeichnet, dass** das Verfahren ausgeführt wird auf einer Rechnereinheit mittels einer Steuerungssoftware, wobei die Rechnereinheit eine Eingabeeinheit zur Bereitstellung der digitalen Farbdaten des Quell-Farbraumes des Projekts und eine Ausgabeeinheit zur Ausgabe der transformierten Werte des Ziel-Farbraumes sowie einen Speicher umfasst, auf welchem Transformationstabellen gespeichert sind, wobei mittels der Steuerungssoftware für die Farbdaten des Quell-Farbraumes des Projekts unter Nutzung der Transformationstabellen und Anwendung des Verfahrens nach den Ansprüchen 1 bis 8 Werte für den Ziel-Farbraum erzeugt und in einem Datensatz bereitgestellt werden.

## Claims

1. Method for the computer-aided execution of transformations of colour data from a source colour space into a target colour space using a transformation rule TRV, wherein
• the source colour space comprises n colours which are present in each point to be represented in combinations of colour components q(1) to q(n),
• the target colour space m comprises values which can be combined to form combinations of components z(1) to z(m),
• at least some combinations of the n colours of the source colour space are assigned combinations of the m components of the target colour space via the transformation rule TRV,
**characterised by** the following steps:
a) for a combination KB of the n colours of the source colour space with colour components qKB(1) to qKB(n), for which no combination of the m components zKB(1) to zKB(m) of the target colour space is assigned via the TRV, selecting a colour i of the combination KB which has a colour component FA = qKB(i) > 0, and for which the following conditions apply:
i) a combination of the target colour space with components z(1)i, z(2)i, ..., z(m)i is assigned to the remaining combination of colour components q^{KB}(j not equal to i) without the component of colour i, and
ii) two further combinations of colour components q(1) to q(n) exist which are identical to one another with one exception and to each of which a combination of components z(1) to z(m) is assigned, and wherein the two combinations of colour components q(1)1 to q(n)1 and q(1)2 to q(n)2 differ only in that the colour component q(i) of colour i in one q(i)¹ = FA > 0 and in the other q(i)2 = 0, so that
1) the combination q(1)1 to q(n)1 with colour component q(i)1 = FA is assigned a corresponding combination of the components z(1)1, z(2)1, ..., z(m)1 of the m values of the target colour space, which forms the colour data set Z1, and
2) the combination q(1)2 to q(n)2 with colour component q(i)2 = 0 is assigned a corresponding combination of the components z(1)2, z(2)2, ..., z(m)2 of the m values of the target colour space, which forms the colour data set Z2,
iii) calculating the ratios V(1)i, V(2)i, ..., V(m)i of each component z(1)1, z(2)1, ..., z(m)1 of the m values of the colour data set Z1 to the respective component z(1)2, z(2)2, ... , z(m)2 of the m values of the colour data set Z2, which form a set of factors V(1)i = z(1)1/z(1)2, V(2)i =z(2)1/z(2)2, ..., V(m)i =z(m)1/z(m)2,
b) applying the factors V(1)i, V(2)i, ..., V(m)i in transformations of combinations KB of colours of the source colour space with n colours, which contain the colour component FA of colour i, whereby, however, the colour component q(i) = 0 is set for the transformation, into the target colour space with m components, in that the z(1)i, z(2)i, ... , z(m)i of the target colour space are multiplied by the respective factors V(1)i, V(2)i, ..., V(m)i.

2. Method according to claim 1, **characterised in that** the method is applied to partial combinations of k<n colours for a given combination of the n colours with combinations of colour proportions q(1) to q(n).

3. Method according to claim 2, **characterised in that** the method is applied to partial combinations of k<n colours up to k=n which build on one another, the resulting factors being applied multiplicatively.

4. Method according to one of the preceding claims, **characterised in that** the size of the colour component of a colour is taken into account to achieve a higher accuracy by preferentially selecting from the possible colours i the one with a smaller colour component.

5. Method according to one of the preceding claims, **characterised in that** for several different possible colours i1, i2, ... the results of the different estimates z(1)i1, ..., z(m)i1 and z(1)i2, ..., z(m)i2 etc. are weighted averaged, the weight of each estimate being selected to be greater the smaller the respective colour component q(i1), q(i2), ... of the colour is.

6. Method according to one of the preceding claims, **characterised in that** the components z(1) to z(m) of the target colour space are device-dependent values.

7. Method according to claim 1 to 5, **characterised in that** the components z(1) to z(m) of the target colour space are device-independent values.

8. Method according to one of the preceding claims, **characterised in that** the transformation rule TRV is in the form of transformation tables.

9. Method according to one of the preceding claims, **characterised in that** the method is carried out on a computer unit by means of control software, wherein the computer unit comprises an input unit for providing the digital colour data of the source colour space of the project and an output unit for outputting the transformed values of the target colour space and a memory on which transformation tables are stored, wherein values for the target colour space are generated by means of the control software for the colour data of the source colour space of the project using the transformation tables and applying the method according to claims 1 to 8 and are provided in a data set.

## Revendications

1. Procédé pour l'exécution assistée par ordinateur de transformations de données de couleurs d'un espace chromatique source dans un espace chromatique cible en utilisant une règle de transformation TRV, dans lequel
• l'espace chromatique source comprend n couleurs qui, en chaque point à représenter, sont présentes dans des combinaisons de proportions de couleurs q(1) à q(n),
• l'espace chromatique cible m comprend des valeurs qui peuvent être combinées en combinaisons de composantes z(1) à z(m),
• par l'intermédiaire de la règle de transformation TRV, des combinaisons des m composantes de l'espace chromatique cible sont associées à au moins quelques combinaisons des n couleurs de l'espace chromatique source,
**caractérisé par** les étapes suivantes :
a) pour une combinaison KB des n couleurs de l'espace chromatique source avec des proportions de couleurs qKB(1) à qKB(n), pour laquelle aucune combinaison des m composantes zKB(1) à zKB(m) de l'espace chromatique cible n'est associée via la TRV, sélectionner une couleur i de la combinaison KB qui possède une proportion de couleur FA = qKB(i) > 0 et pour laquelle les conditions suivantes s'appliquent :
i) une combinaison de l'espace chromatique cible avec des composantes z(1)i, z(2)i, ..., z(m)i est associée à la combinaison restante des composantes de couleur qKB(jdifférente de i) sans la composante de la couleur i, et
ii) il existe deux autres combinaisons de parties de couleur q(1) à q(n), identiques l'une à l'autre à une exception près, auxquelles est associée à chaque fois une combinaison de composantes z(1) à z(m) et les deux combinaisons de parties de couleur q(1)1 à q(n)1 et q(1)2 à q(n)2 ne se distinguant que par le fait que la partie de couleur q(i) de la couleur i est dans l'une q(i)1 = FA > 0 et dans l'autre q(i)2 = 0, de sorte que
1) à la combinaison q(1)1 à q(n)1 avec une proportion de couleur q(i)1 = FA est associée une combinaison correspondante des composantes z(1)1, z(2)1, ..., z(m)1 des m valeurs de l'espace chromatique cible, qui forme le jeu de données de couleur Z1, et
2) à la combinaison q(1)2 à q(n)2 avec une proportion de couleur q(i)2 = 0 est associée une combinaison correspondante des composantes z(1)2, z(2)2, ..., z(m)2 des m valeurs de l'espace chromatique cible, qui forme l'ensemble de données de couleur Z2,
iii) calculer les rapports V(1)i, V(2)i, ..., V(m)i de chaque composante z(1)1, z(2)1, ..., z(m)1 des m valeurs de l'ensemble de données de couleur Z1 à la composante respective z(1)2, z(2)2, ... , z(m)2 des m valeurs de l'ensemble de données de couleur Z2, qui forment un ensemble de facteurs V(1)i = z(1)1/z(1)2, V(2)i =z(2)1/z(2)2, ..., V(m)i =z(m)1/z(m)2,
b) application des facteurs V(1)i, V(2)i, ..., V(m)i lors de transformations de combinaisons KB de couleurs de l'espace chromatique source avec n couleurs, qui contiennent la composante chromatique FA de la couleur i, la composante chromatique q(i) étant toutefois fixée à 0 pour la transformation, dans l'espace chromatique cible avec m composantes, en ce que les z(1)i, z(2)i, ..., ..., z(1)i, ..., ..., ..., z(2)i, ..., ..., résultant de la transformation, sont utilisés dans l'espace chromatique cible. z(m)i de l'espace couleur cible sont multipliés par les facteurs V(1)i, V(2)i, ..., V(m)i respectifs.

2. Procédé selon la revendication 1, **caractérisé en ce que**, pour une combinaison donnée des n couleurs, le procédé est appliqué à des combinaisons partielles de k<n couleurs avec des combinaisons de proportions de couleurs q(1) à q(n).

3. Procédé selon la revendication 2, **caractérisé en ce que** le procédé est appliqué à des combinaisons partielles successives de k<n couleurs jusqu'à k=n, les facteurs résultants étant appliqués de manière multiplicative.

4. Procédé selon l'une des revendications précédentes, **caractérisé en ce que** l'on tient compte de l'importance du pourcentage de couleur d'une couleur pour obtenir une plus grande précision, en choisissant de préférence, parmi les couleurs possibles i, celle dont le pourcentage de couleur est le plus petit.

5. Procédé selon l'une des revendications précédentes, **caractérisé en ce que**, pour plusieurs couleurs possibles différentes i1, i2, ..., on fait la moyenne pondérée des résultats des différentes estimations z(1)i1, ..., z(m)i1 ainsi que z(1)i2, ..., z(m)i2, etc., le poids de chaque estimation étant choisi d'autant plus grand que la composante chromatique respective q(i1), q(i2), ... de la couleur est petite.

6. Procédé selon l'une des revendications précédentes, **caractérisé en ce que** les composantes z(1) à z(m) de l'espace colorimétrique cible sont des valeurs dépendantes de l'appareil.

7. Procédé selon les revendications 1 à 5, **caractérisé en ce que** les composantes z(1) à z(m) de l'espace chromatique cible sont des valeurs indépendantes du dispositif.

8. Procédé selon l'une des revendications précédentes, **caractérisé en ce que** la règle de transformation TRV se présente sous la forme de tables de transformation.

9. Procédé selon l'une des revendications précédentes, **caractérisé en ce que** le procédé est exécuté sur une unité d'ordinateur au moyen d'un logiciel de commande, l'unité d'ordinateur comprenant une unité d'entrée pour la mise à disposition des données numériques de couleur de l'espace chromatique source du projet et une unité de sortie pour la sortie des valeurs transformées de l'espace chromatique cible ainsi qu'une mémoire sur laquelle sont stockées des tables de transformation, des valeurs pour l'espace chromatique cible étant générées et mises à disposition dans un ensemble de données au moyen du logiciel de commande pour les données de couleur de l'espace chromatique source du projet en utilisant les tables de transformation et en appliquant le procédé selon les revendications 1 à 8.
